# EUROPEAN PATENT APPLICATION

(11) **EP 4 047 546 A1**
(43) Date of publication of application: **24.08.2022**
(21) Application number: 21158154.1
(22) Date of filing: 19.02.2021
(51) Int. Cl.: G06T 5/00

(54) **METHOD, APPARATUS AND COMPUTING DEVICE FOR COMPENSATING DISTURBING OBJECTS IN AN IMAGE**

(71) Applicant: Electrolux Appliances Aktiebolag, 105 45 Stockholm (SE)
(72) Inventor: TOPPANO, Michele, 33080 Porcia (IT); WEBER, Mario, 91541 Rothenburg ob der Tauber (DE); SCHIFFLER, Thorben, 91541 Rothenburg ob der Tauber (DE); SMIRNOV, Vladimir, 197342 Saint-Petersburg (RU); SHUSTROV, Dmitrii, 197342 Saint-Petersburg (RU)
(74) Representative: Electrolux Group Patents

(57) **Abstract**

The present invention relates to a method for providing at least one manipulated image (102) of a substance (2) to be processed in a cavity (3) of an apparatus (1), preferably a kitchen apparatus (1), the substance (2) being preferably shielded by a metal grid (4), the method comprising: Taking at least one image (101) of the substance (2) by a camera unit (5), the camera unit (5) being preferably arranged opposite to the substance (2) with reference to the metal grid (4); Transmitting the at least one image (101) taken by the camera unit (5) to a computing device (6) via a signal connection (S); Identifying at least one disturbing object (7) in the at least one image (101) using an inpainting algorithm; Generating at least one calculated object (8) being different to the at least one disturbing object (7) using the inpainting algorithm; Manipulating the at least one image (101) by replacing or overlying the at least one disturbing object (7) by the at least one calculated object (8) in the at least one image (101). The present invention relates further to a computing device (6) and an apparatus (1) being configured to perform at least partially the method for providing at least one manipulated image (102).

## Description

The present invention relates to a method for providing at least one manipulated image of a substance to be processed in a cavity of an apparatus, preferably a kitchen apparatus. The present invention relates further to a computing device and an apparatus being configured to perform at least partially the method for providing at least one manipulated image.

Image processing methods are known in several areas of daily life such as in the field of medical technology or in the field of driver assistance systems. Such methods are preferably computer-assisted or computer-implemented and performed by, for example, a device such as a camera for taking an image of an object, a computing device for processing the image and a display device for displaying the processed image. One of the core components of image processing methods is a computer program (software), i.e. algorithms for processing the image via computer-executable instructions.

For example, United States Patent No. US 10,387,765 B2 describes a computer-implemented method for correction of an image from a medical scanner, the image having a level of artifact due to the acquisition by the medical scanner. The method determines a probability of artifact abnormality for the image using a deep generative machine-learnt model and minimizes the level of artifact with a function of a physics model which includes a characteristic specific to the medical scanner. The deep generative machine-learnt model learnt with only training images having a quality above a threshold.

European patent application No. EP 3 629 301 A1 describes a computer-implemented method for realistic visualization of a virtual three-dimensional dental model using an inpainting algorithm.

United States Patent No. US 6,643,414 B1 describes an image processing method and apparatus for superposing secret information on an image and coding and decoding the image.

United States Patent No. US 6,944,355 B2 describes a method and an apparatus for automatically adjusting reproduced images on edge-disturbed output media.

When it comes to household appliances, camera units are becoming more and more common, for example to take an image of food to be prepared and keep the user of the household appliance up to date, even if the user is not in front of the household appliance.

For example, ovens are equipped with camera units at different positions. The positions of a camera unit for taking or acquiring images of a food to be processed may vary depending on the type and the construction of the oven and the technology used, e.g. microwave oven or electric stove.

Thus, in the field of household appliances and especially in the field of kitchen equipment, there is for example a need for providing camera images of the food (object) to be prepared in high quality and as realistic or authentic as possible, i.e. almost a visual representation that hardly differs from the original.

However, images generated by a camera unit may contain disturbing objects that affect the image of the food and thus its quality negatively when displayed visually. Disturbing objects being contained in the image taken by the camera unit may be image areas, i.e. collections or accumulations of pixels, containing and/or conveying representations that do not belong to the object itself and/or which are not inherent to the object to be taken by the camera unit.

It is hence an object of the invention to provide a method for providing an image of a substance to be processed wherein the image is essentially cleared from disturbing objects when displayed visually.

It is a further object of the invention to provide an apparatus and a computing device to perform the method according to the invention.

Additionally, it is further an object of the invention to provide a computer program product including computer-executable instructions for performing the method according to the invention at least partially.

At least one of the objects is achieved by the method of independent claim 1, the computing device of claim 11, the apparatus of claim 13 and/or the computer program product of claim 16. Further examples and applications of the invention result from the dependent claims and are explained in the following description with partial reference to the figures.

A first general aspect of the invention relates to a method for providing at least one manipulated image of a substance to be processed in a cavity of an apparatus, preferably a kitchen apparatus, the substance being preferably shielded by a metal grid. The method comprises:
Taking at least one image of the substance by a camera unit, the camera unit being preferably arranged opposite to the substance with reference to the metal grid;
Transmitting the at least one image taken by the camera unit to a computing device via a signal connection;
Identifying at least one disturbing object in the at least one image using an inpainting algorithm;
Generating at least one calculated object being different to the at least one disturbing object using the inpainting algorithm;
Manipulating the at least one image by replacing or overlying the at least one disturbing object by the at least one calculated object in the at least one image.

The method of the invention provides for example a manipulated image of camera unit of a substance, e.g. food to be prepared in the cavity of an oven, which is essentially cleared from unwanted disturbed objects.

The aspect according to which the camera unit can be preferably arranged opposite to the substance with reference to a metal grid prevents for example the camera unit from being damaged, preferably when the apparatus is a microwave oven.

The apparatus may be for example a microwave oven or an electrical stove or the like.

The method according to the invention can be preferably at least partially a computer-implemented method to perform the inpainting algorithm. The inpainting algorithm may be preferably part of a computer program product being configured to process images, preferably when executed by a computing device.

The at least one image can be provided as a file in an electronic data format, e.g. JPG format, TIF format or any other format that is able to be processed by a computing device. It is also possible that the at least one image comprises moving images, i.e. video images. Thus, the at least one image can be processed digitally.

The signal connection between the camera unit and the computing device can be a wired and/or a wireless connection (e.g. WLAN, Bluetooth or the like).

According to a further aspect of the invention, the method can further comprise:
Transmitting the manipulated at least one image to a display device unit via a further signal connection;
Displaying the manipulated at least one image on the display device unit.

The further signal connection between the computing device and the display device unit can be a wired and/or a wireless connection (e.g. WLAN, Bluetooth or the like).

This allows for example to display the manipulated image on a variety of different display devices (e.g. television unit, smart phone, tablet, personal computer or the like).

According to a further aspect of the invention, the inpainting algorithm can be based on a generative adversarial networks architecture, preferably comprising a generative network model and an adversarial network model, and/or comprises at least one generative adversarial networks algorithm including a generator module and a discriminator module.

This allows for example that the method can provide the manipulated at least one image based on a processing of the at least one image only or the respective taken at least one image. There is no need for example to access saved reference or comparative images or to train the inpainting algorithm based on previously taken image/s.

With the technology of using a generative adversarial networks architecture, it is possible to more or less extract information of the current at least one image in order to make for example a prediction or a proposal for the at least one calculated object for the manipulation of the at least one disturbing object included in the at least one image.

According to a further aspect of the invention, at least one prediction model is used for generating the at least one calculated object, the at least one prediction model being based on the evaluation of at least one section of the at least one image and/or at least one criterion being extracted and/or derived and/or interpolated from the at least one section of the at least one image.

The prediction model can comprise for example a set of sub-algorithms or at least one sub-algorithm being configured to calculate pixel values and/or pixel information (such as color-coding and/or position information of pixels in the at least one image) for the at least one calculated object.

The at least one section may comprise for example at least one pixel of the at least one image or preferably a collection or accumulation of pixels being positioned adjacent or spaced apart.

The at least one section may be used in connection with the inpainting algorithm in order to process the at least one image as disclosed herein.

According to a further aspect of the invention, the at least one criterion comprises a parameter and/or a range of parameters and/or a condition to be fulfilled, each preferably linked to a probability parameter.

For example, it is possible to calculate for an accumulation of pixels representing the at least one disturbing object at least one color-coding which represents at least one average value and/or at least one average parameter of at least one accumulation of pixels being adjacent and/or spaced apart (preferably in order to fulfill for example at least one further parameter and/or at least one condition). The at least one average parameter and/or the at least one further parameter and/or the at least one condition can be generated by the inpainting algorithm when processing the at least one image.

For example, this allows the algorithm and thus the method according to the invention to be further optimized or optimizable and variably adjusted or adjustable.

According to a further aspect of the invention, identifying the at least one disturbing object may further comprise:
Recognizing and/or evaluating the at least one disturbing object by the inpainting algorithm as being incompatible with regard to at least one section of the at least one image. The at least one section can be arranged surrounding and/or adjacent to the at least one disturbing object in the at least one image.

This allows for example a targeted determination of the position of the at least one disturbing object in the at least one image.

According to a further aspect of the invention, generating the at least one calculated object may further comprise:
Evaluating the at least one calculated object by the inpainting algorithm as being compatible with regard to at least one section of the at least one image being arranged surrounding and/or adjacent to the at least one calculated object in the at least one image.

This allows for example the possibility of verification of the at least one calculated object, preferably according to or in order to fulfill at least one verification parameter and/or at least one condition.

According to a further aspect of the invention, the at least one disturbing object and/or the at least one calculated object and/or at least one section of the at least one image can comprise at least one pixel value and/or at least one pixel information.

This allows for example that the at least one image can be processed electronically by a computing device and thus in a very efficient manner.

According to a further aspect of the invention, the inpainting algorithm may be configured to and/or trained to identify a plurality of disturbing objects being arranged regularly in at least one direction or mesh pattern-like in the at least one image. Additionally or alternatively, the method may further comprise training of the inpainting algorithm using at least one section of the at least one image, preferably to identify a plurality of disturbing objects being arranged regularly in at least one direction or mesh pattern-like in the at least one image.

The method according to the invention can thus be for example adapted and/or optimized to protective devices such as metal grids and/or sight glasses of corresponding kitchen apparatuses that inter alia necessarily serve as a shield for a camera unit.

According to a further aspect of the invention, identifying the at least one disturbing object may further comprise:
Searching the at least one image for a plurality of sections comprising identical and/or at least similar pixel value and/or pixel information.

The searching can for example be based on at least one search sub-algorithm which processes the at least one image in accordance of at least one searched section of the at least one image. There is for example no need for comparing with at least one section of reference or comparative images being stored and retrievable.

A second general aspect of the invention relates to a computing device, comprising at least one central processing unit being connected to at least one memory and at least one interface for signal connection with at least one camera unit, the computing device being configured to perform at least partially the method for providing at least one manipulated image, i.e. the method as disclosed herein.

With such a computing device, preferably for processing the at least one image as disclosed herein, the manipulated at least one image can be provided for example essentially in real time, i.e. without noticeable time delay.

According to a further aspect of the invention, the computing device may further comprise at least one display device unit and/or is connectable with or connected with at least one display device unit via a further signal connection.

In other words, the computing device may be configured to be connected with at least one display device unit. This allows for example that the manipulated at least one image may be provided visually to a user on several display device units.

A third general aspect of the invention relates to an apparatus, preferably a kitchen apparatus, for processing a substance in a cavity of the apparatus, the substance being preferably shielded by a metal grid. The apparatus comprises a camera unit, the camera unit being preferably arranged opposite to the substance with reference to the metal grid, and wherein the apparatus comprises a computing device and/or is connectable with or connected with a computing device via a further signal connection, the computing device, preferably as disclosed herein, being configured to perform at least partially the method for providing at least one manipulated image as disclosed herein.

In other words, the apparatus may be configured for connection with a computing device.

According to a further aspect of the invention, it may be provided that the apparatus may further comprise at least one display device unit and/or is connectable with or connected with at least one display device unit via a further signal connection.

In other words, the apparatus may be configured for connection with at least one display device unit.

The further signal connection can be a wired and/or a wireless connection (e.g. WLAN, Bluetooth or the like).

According to a further aspect of the invention, the apparatus can be an oven, preferably a microwave oven or a microwave-combi oven, a refrigerator, a freezer, a hood, a washing machine or a dryer or any other corresponding apparatus in the field of household appliances.

A fourth general aspect of the invention relates to a computer program product, wherein the computer program product comprises computer program code which is stored on a machine-readable medium or being embodied by at least one electromagnetic wave comprising at least one computer program code segment, and includes computer-executable instructions for performing at least partially the method for providing at least one manipulated image, i.e. the method of the invention as disclosed herein, preferably when executed a computing device, preferably a computing device as disclosed herein, or the apparatus as disclosed herein.

In order to avoid repetition, features which are purely directed to the method according to the invention and/or disclosed in connection therewith should also be considered as disclosed according to the computing device, the computer program product and/or the apparatus and be claimable and vice versa.

The previously described examples and features of the invention can be combined with each other in any way.

Further or other details and advantageous effects of the invention are described in more detail below with reference to the attached figures:
- Fig. 1: illustrates a schematic graphical representation of an example of the apparatus according to the invention being configured to connect with a computing device according to the invention and a display device;
- Fig. 2: illustrates an example of an image containing disturbing objects;
- Fig. 3: illustrates an enlarged region of the image with the disturbing objects as illustrated in Fig. 2;
- Fig. 4: illustrates the enlarged region of the image as illustrated in Fig. 3 in a manipulated condition, i.e. with compensated disturbing objects;
- Fig. 5: illustrates a flowchart of an example of the method according to the invention and involved components and/or elements for more detailed illustration.

Identical or functionally equivalent components or elements are marked or labeled in the figures with the same reference signs. For their explanation, reference is also made to the description of other examples and/or figures in order to avoid repetition.

The following detailed description of the examples shown in the figures serves as a closer illustration or exemplification and is in no way intended to limit the scope of the invention.

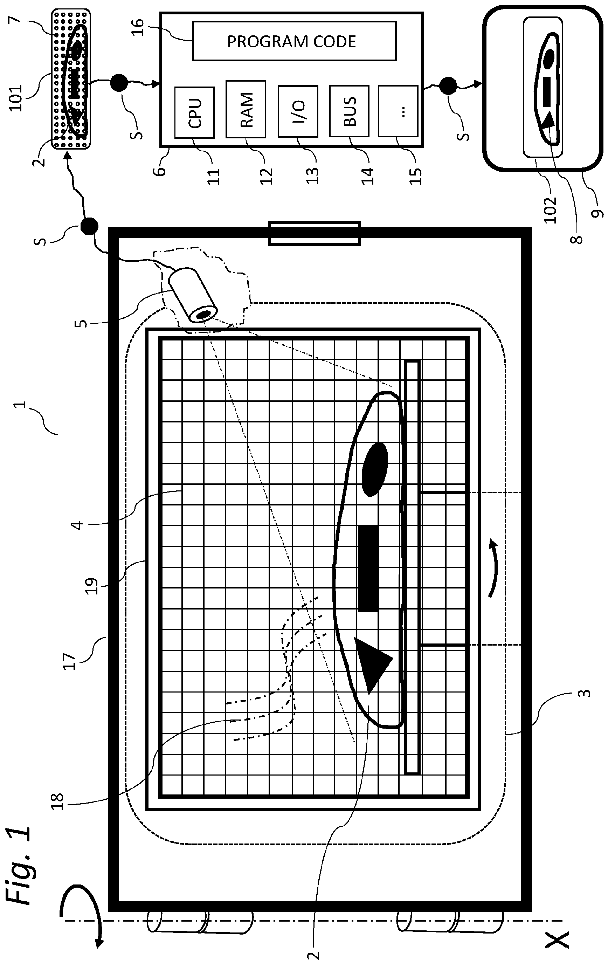

Figure 1 illustrates a schematic graphical representation of an example of the apparatus 1 according to the invention.

In detail, the apparatus 1 is a microwave oven. In a further example of the invention, the apparatus can be a microwave-combi oven, a refrigerator, a freezer, a hood, a washing machine or a dryer.

The microwave oven as shown in figure 1 can be based on a microwave oven known from the state of the art. The microwave oven 1 comprises an oven door 17. The oven door 17 is arranged pivotably to the casing of the microwave oven 1 via hinge mountings and can thus pivot around a pivot axis in order to open and to close the microwave oven 1. The pivot axis is labeled with "X" in figure 1. The oven door 17 serves for opening and closing the microwave oven 1 in order to fill and to remove the microwave oven 1 with a substance 2 to be processed.

The oven door 17 itself comprises a metal grid 4. The metal grid 4 is necessary in order to prevent the emission of harmful microwaves outside the microwave oven 1. The metal grid 4 is for example a finer or a coarser mesh of more or less regularly arranged holes, i.e. through-holes. The holes can have an essentially rectangular-shaped, an essentially square-shaped or an essentially circular-shaped cross section. Preferably, the holes can be arranged with almost the same or identical distance from each other in order to build up a pattern-like arrangement.

In any case, the metal grid 4 is configured accordingly such that it is possible to visually capture the content inside the microwave oven 1 by a user of the microwave oven 1 and/or for example by a camera unit 5 which will be described in further detail below.

The content inside the microwave oven 1 can be a substance 2 such as food (pizza, pasta or the like) to be processed, i.e. to be prepared in the form of heat treatment (warming up) via microwaves 18. The microwaves 18 of the microwave oven 1 for warming up the food 2 in figure 1 are illustrated symbolically. The microwaves 18 may for example vary in their energy content.

The food 2 is arranged in the cavity 3 of the microwave oven 1, preferably on a desk that is rotatable supported in order to achieve more or less a uniform warming up via the microwaves 18 due to rotating the food 2 during the warming up.

The metal grid 4 is integrated in the frame of the oven door 17. Additionally, a plate 19 is provided adjacent to the metal grid 4. The plate 19 is arranged within the frame of the oven door 17 but at the outer side of the oven door 17 such that the metal grid 4 of the oven door 17 is arranged between the cavity 3 of the microwave oven 1 and the plate 19 of the oven door 17. The plate 19 is made of transparent or at least partially translucent material such as glass. The plate 19 serves both as a security and to ensure the opportunity for visual inspection of the content, i.e. the food 2 inside the cavity 3 of the microwave oven 1. In other words, the food 2 that is arranged in the cavity 3 of the microwave oven 1 is shielded by a metal grid 4 and a plate 19 of the oven door 17.

The oven door 17 further comprises a camera unit 5 being arranged within the frame of the oven door 17 and being configured and/or aligned to take at least one image 101 of the food 2 being arranged in the cavity 3. The at least one image 101 will be described in further detail below.

The camera unit 5 can be a camera unit as known from prior art and suitable for integration in or arrangement at the microwave oven 1. The camera unit 5 is preferably configured as a digital camera unit 5 for creating digital images 101. It is possible that digital images 101 comprise digital videos.

Due to harmful effect of microwaves 18 on the camera unit 5, the camera unit 5 is arranged outside of the cavity 3 of the microwave oven 1. Preferably, the camera unit 5 is arranged at the outer side of the oven door 17 such that the metal grid 4 and the plate 19 are arranged between the cavity 3 and the camera unit 5 when the oven door 17 is closed. In other words, the camera unit 5 needs to be protected accordingly from the influence of the microwaves 18 to avoid irreparable damage. Such protection can be for example realized by the metal grid 4. The metal grid 4 can be preferably arranged at least between the camera unit 5 and the area or region of the microwaves 18.

However, the at least one image 101 or the images 101, preferably digital at least one image 101 or digital images 101, taken by the camera unit 5 contain at least one disturbing object 7 or, with regard to the present example, a plurality of disturbing objects 7 when displayed visually. This results from the fact that the camera unit 5 has taken the image 101 from the food 2 through the metal grid 4 in the direction of the cavity 3. Figure 1 shows an example of such an image 101 of a food 2 (e.g. a pizza) being inserted or arranged in the cavity 3 of the microwave oven 1.

The characteristic or preferably the information content of a disturbing object 7 in an image 101 will be explained in more detail below on the background of the description of an example of the method according to the invention.

Figure 1 illustrates further schematically an example of a computing device 6 in the form of an electronic data processing device. The computing device 6 is configured to perform at least partially the method of the invention for providing at least one manipulated image 102 (see also figure 1) as disclosed herein. The manipulated image 102 represents preferably a result of the method of the invention as disclosed herein.

The computing device 6 as a computing system for implementing and performing at least partially the method of the invention comprises internal hardware units. At least one central processing unit (CPU) 11 is configured to perform calculations and logic operations required to execute a computer program, i.e. algorithms of a computer program. At least one random access memory unit(RAM) 12 constitutes - together with at least one read-only memory unit (ROM) and at least one internal or external data storage units or devices (for reasons of clarity not shown in figure 1) - the main memory of the computing device 6. Preferably the at least one random access memory unit 12 may be used for storing and/or buffering information, i.e. data including the at least one image 101 and/or the at least one manipulated image 102 and/or parts thereof representing at least one interim status.

The computing device 6 may further comprise at least one input/output unit 13, i.e. at least one interface for signal communication with internal hardware units and/or external devices (e.g. PCI-, USB-, VGA-, HDMI-, UMTS-interface or the like). For example, at least one input/output unit 13 can further comprise a WLAN- or a Bluetooth-adapter for wireless signal communication for data transportation.

A bus 14 represents the main data transportation system interconnecting the internal hardware units 11 to 15 of the computing device 6 as disclosed herein.

Further internal hardware units 15 of the computing device 6 like a fan, a cooler, a video card unit, an electrical energy supply unit, etc., are not shown in figure 1 for the sake of clarity.

With regard to the method according to the invention, the computing device 6 is preferably configured to perform at least partially the method according to the invention as disclosed herein and to provide the at least one manipulated image 102 via at least one computer program product. The at least one computer program product comprises a program code 16 and includes computer-executable instructions for manipulating the at least one image 101 including the at least one disturbing object 7.

Figure 1 illustrates further schematically an example of a display device unit 9. The display device unit 9 is configured to display the manipulated at least one image 102. It is also possible that the display device unit 9 is configured to display the at least one image 101.

It is possible that the microwave oven 1 comprises both the computing device 6 and the display device unit 9. It is also possible that the microwave oven 1 is configured for connection with the computing device 6 and/or the display device unit 9. The connection between the microwave oven 1, i.e. in particular the camera unit 5, the computing device 6 and the display device unit 9 can further comprise a wired signal communication and/or wireless signal communication.

In case of a wireless signal communication (e.g. WLAN, Bluetooth or the like), the display device unit 9 can be part of mobile telecommunications unit such as a tablet, smart phone or the like. Additionally or alternatively, the display device unit 9 may be for example part of a television unit or a personal computer like a desktop computer or a laptop computer.

The wired and/or the wireless connection preferably comprises a signal connection S. For example, the at least one image 101 taken by the camera unit 5 can be transmitted to the computing device 6 in form of at least one digital signal S or in the form of a plurality of digital signals S. The at least one digital signal S may be an electric signal or an electromagnetic signal. The same can apply to the plurality of digital signals.

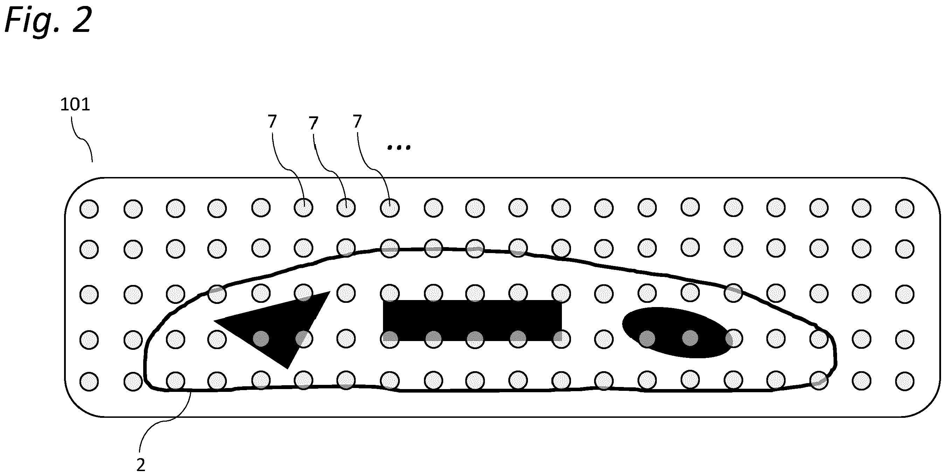

Figure 2 illustrates an example of an image 101 containing disturbing objects 7. As previously described, based on the illustration in figure 1, the image 101 is taken by the camera unit 5. The camera unit 5 is preferably arranged opposite to the food 2 with reference to the metal grid 3 of the microwave oven 1. Thus, the metal grid 4 creates an unwanted disturbance in the image taken by the camera unit 5.

The disturbance consists of several disturbing objects 7 being arranged according to a pattern that represents specific places, i.e. knots of the metal grid 4.

A disturbing object 7 of the image 101 can be an object in the image 101 that is evaluated as an object, i.e. a collection or an accumulation of pixels that affects the image 101 negatively according to at least one criterion when displayed visually.

The at least one criterion can comprise a result of a comparison of a collection or accumulation of pixels with at least one adjacent collection or accumulation of pixels in the image 101.

In other words, disturbing objects 7, being contained in the image 101 of the camera unit 5, may be image areas, i.e. connections or accumulations of pixels. Such areas contain and/or convey representations that do not belong to the object (food 2) of the image 101 itself and/or which are not inherent to the object to be captured by the camera unit 5. Further details will be described below with regard to the description of an example of the method according to the invention.

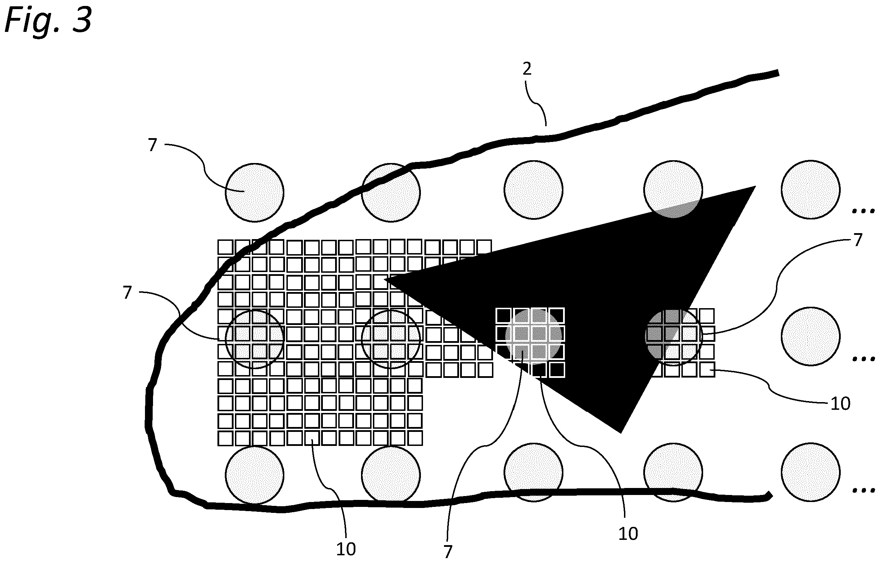

Figure 3 illustrates an enlarged region of the image 101 containing disturbing objects 7 as illustrated in Figure 2 (only some of the disturbing objects 7 are labeled with a reference sign accordingly). This illustration shows very clearly again the influence of the metal grid 4 on the image 101 which was taken with the camera unit 5 (see figure 1).

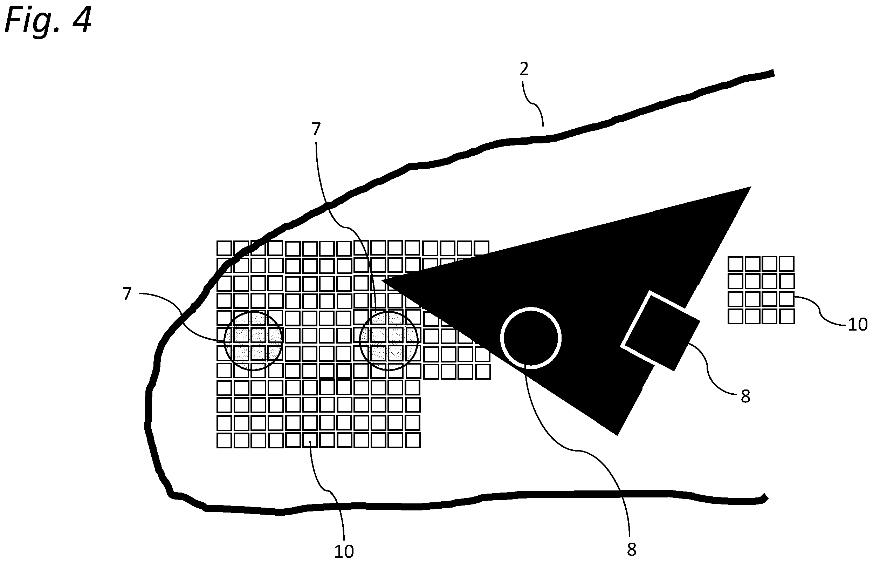

In the present example of the representation of the image 101 the disturbing objects 7 form a pattern of multiple circular-shaped areas when displayed visually. The circular-shaped areas of the disturbing objects 7 are assigned a color tone which is, when displayed visually, not inherent to the food 2. The circular-shaped areas of the disturbing objects 7 need thus to be manipulated in order to provide a manipulated image 102 being cleared or essentially cleared from such disturbing objects 7 when displayed visually (see figure 1 and figure 4).

The image 101 is preferably available in digitally editable and/or processable form. Thus, the image 101 is present in an electronic data format that can be processed by a computer program code being loaded and executed on the computing device 6.

In figure 3 sections 10 are illustrated which serve for processing the image 101 taken by the camera unit 5 and manipulating the image 101 in order to provide a manipulated image 102. A section 10 can comprise at least one pixel of the image 101 or preferably a collection or accumulation of pixels being positioned adjacent or spaced apart.

In other words, the image 101 can be provided as a file in an electronic data format by the camera unit 5. It can thus be composed of a finite number of pixels. Each pixel contains a finite number of pixel information or each pixel is assigned to a pixel information (e.g. color-coding, position information or the like).

Figure 4 illustrates the enlarged region of the image 101 as illustrated in figure 3 now in an at least partially manipulated condition or manipulated form that constitutes at least partially the manipulated image 102 (see also figure 1). The manipulation of the image 101 has been realized at least partially by the method according to the invention.

Some of the disturbing objects 7 are thus replaced or overlaid by calculated objects 8. A calculated object 8 can comprise - in analogy to a disturbing object 7 - a collection or an accumulation of pixels being preferably different to the collection or accumulation of pixels of the corresponding disturbing object 7. The calculated object 8 comprises more or less a prediction or a proposal of graphical information that can be attributed or allocated to the object (food 2) taken by the camera unit 5. Thus, the manipulated image 102, including calculated objects 8, represents more or less a proposal or a variant of the image 101 without or essentially without disturbing objects 7 when displayed visually. It is more or less a reconstruction of separate areas of the image 101 by different calculated areas, i.e. with different colors.

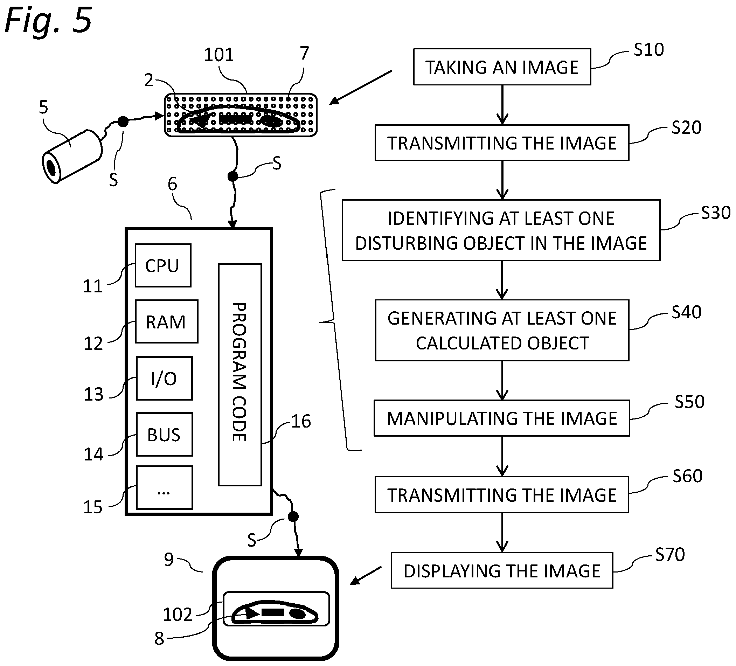

Figure 5 illustrates inter alia a flowchart of an example of the method according to the invention in connection with the apparatus 1, i.e. the microwave oven 1 and the computing device 6 as described above in order to avoid repetitions. The following example of the method is described by means of one image 101 taken by the camera unit 5.

However, it is understood that the method can be applied to at least one image 101 or preferably a plurality of images 101. It is also possible that the method according to the invention can be applied to moving images, i.e. video images, taken by, for example, a camera unit 5.

As regards the illustration in figure 5, the method can be initiated or started in phase S10 by providing an image 101 of a substance like food 2. The provision of the image 101 can be realized by taking the image 101 of the food 2 by a camera unit 5. The camera unit 5 may be preferably arranged opposite to the substance, i.e. the food 2 with reference to the metal grid 4.

The image 101 is preferably present in an electronic data format, e.g. JPG format, TIF format or any other format that is able to be processed by an electronic data processing apparatus such as the computing device 6 or at least a unit thereof.

In phase S20 the provided image 101, preferably the image 101 taken by the camera unit 5, is transmitted to a computing device 6 via a signal connection S. The signal connection S between the computing device 6 and the camera unit 5 can be a wired and/or a wireless connection (e.g. WLAN, Bluetooth or the like).

In phase S30 the image 101 is processed by the processing unit 11 of the computing device 6 via computer-executable instructions of program code of a computer program product. In other words, the computer program is loaded and executed on the computing device 6 for processing the image 101, i.e. in detail pixel values and/or pixel information of pixels of the image 101.

In the following, the respective processing of the image 101 is now described without referring to apparatuses, devices and/or units as already disclosed herein. Focus is put on the example of the method and preferably the processing of the image 101 accordingly.

Phase S30 comprises identifying at least one disturbing object 7 in the image 101 using an inpainting algorithm of the computer program product being implemented and executed accordingly.

The inpainting algorithm may be preferably based on a generative adversarial networks architecture. The generative adversarial networks architecture may comprise sub-algorithms that comprise or implemented a generative network model and an adversarial network model, and/or may comprise at least one generative adversarial networks algorithm including a generator module and a discriminator module.

With such an inpainting algorithm, it is possible to identify at least one disturbing object 7 with a certain probability resulting from the processing of the image 101 itself.

In the inpainting algorithm as disclosed herein is preferably able to recognize more or less regular or essentially regular patterns of disturbed objects 7 when displayed visually, i.e. collection or accumulation of pixels with nearly identical or at least similar color-coding.

The inpainting algorithm can be configured to and/or trained to identify a plurality of disturbing objects 7 being arranged more or less regularly in at least one direction or mesh pattern-like in the image 101 when displayed visually. Additionally or alternatively, the method can further comprise training of the inpainting algorithm using at least one section 10 of the image 101, preferably to identify a plurality of disturbing objects 7 being arranged regularly in at least one direction or mesh pattern-like in the image 101 when displayed visually.

Identifying at least one disturbing object 7 in the image 101 can further comprise searching the image 101 for a plurality of sections 10 comprising identical and/or at least similar pixel value and/or pixel information (color-coding, position information of pixels, etc.).

Additionally or alternatively, identifying at least one disturbing object 7 may comprise recognizing and/or evaluating the at least one disturbing object 7 by the inpainting algorithm as being in-compatible with regard to at least one section 10 of the image 101. The at least one section 10 being arranged surrounding and/or adjacent to the at least one disturbing object 7 in the at least one image 101 when the image 101 is displayed visually.

A section 10 can comprise at least one pixel of the image 101 or preferably a collection or an accumulation of pixels and/or being adjacent or spaced apart when displayed visually. In phase S40 at least one calculated object 8 is generated using the inpainting algorithm. The at least one calculated object 8 is different to the at least one disturbing object 7. At least one prediction model as a part of the inpainting algorithm is used for generating the at least one calculated object 8. The at least one prediction model can be based on the evaluation of at least one section 10 of the image 101 and/or at least one criterion being extracted and/or derived and/or interpolated from the at least one section 10 of the image 101.

The at least one criterion can comprise a parameter and/or a range of parameters and/or a condition to be fulfilled, each preferably linked to a probability parameter.

Generating the at least one calculated object 8 in phase 40 can further comprise evaluating the at least one calculated 8 object by the inpainting algorithm. The at least one calculated object 8 can be evaluated as being compatible with regard to at least one section 10 of the image 101 being arranged surrounding and/or adjacent to the at least one calculated object 8 in the image 101 when displayed visually.

In phase 50 of the example of the method as shown in the flowchart in figure 5, the image 101 is manipulated by the inpainting algorithm. Manipulating the image 101 may preferably comprise replacing and/or overlying the at least one disturbing object 7 by the at least one calculated object 8 in the image 101. Thus, a manipulated image 102 with compensated, i.e. cleared or essentially cleared disturbing objects 7 can be provided.

Overlying can comprise changing in the sense of adding pixel values and/or pixel information of pixels of calculated objects 8 to corresponding pixel values and/or pixel information of pixels of disturbing objects 7 in order to manipulate the disturbing objects 7 and thus the image 101 by the calculated objects 8.

In phase S60 the provided manipulated image 102 is transmitted to a display device unit 9 via a signal connection S. The signal connection S between the computing device 6 and the display device unit 9 can be a wired and/or a wireless connection (e.g. WLAN, Bluetooth or the like).

In phase S70 the transmitted manipulated image 102 may be displayed on a display device unit 9 as disclosed herein.

It is understood that the method of the invention, preferably the inpainting algorithm, may comprise reiteration modules/reiteration sub-algorithms, or may reiterate at least one of the phases as disclosed herein in order to improve and optimize the quality of the manipulated image 102 accordingly.

It is also understood that the method of the invention, preferably the inpainting algorithm may process the image 101 using at least one parameter and/or at least one condition to be fulfilled according to which the at least one parameter and/or the at least one condition may be derived from the image 101 by the inpainting algorithm.

The invention is not limited to the example described above. Rather, a large number of variants and modifications are possible, which also make use of the inventive idea and therefore fall within the scope of protection.

The invention can be realized at least partially in hardware and/or software and can be transferred to or realized with several physical products, i.e. apparatuses and/or devices.

The invention can be transferred to at least one computer program product as regards preferably the method or at least partially the method according to the invention.

Preferably, the invention also claims protection for the subject matter and the features of the sub-claims independently of the claims referred to.

### List of reference signs

- 1: apparatus/microwave oven
- 2: substance/food
- 3: cavity
- 4: metal grid
- 5: camera unit
- 6: computing device
- 7: disturbing object
- 8: calculated object
- 9: display device unit
- 10: segment
- 11: central processing unit (CPU)
- 12: random access memory unit (RAM)
- 13: input/output unit
- 14: bus
- 15: further internal hardware units
- 16: program code
- 17: oven door
- 18: microwave
- 19: plate
- 101: image
- 102: manipulated image
- S: signal
- X: pivot axis

## Claims

1. A method for providing at least one manipulated image (102) of a substance (2) to be processed in a cavity (3) of an apparatus (1), preferably a kitchen apparatus (1), the substance (2) being preferably shielded by a metal grid (4), the method comprising:
• Taking at least one image (101) of the substance (2) by a camera unit (5), the camera unit (5) being preferably arranged opposite to the substance (2) with reference to the metal grid (4);
• Transmitting the at least one image (101) taken by the camera unit (5) to a computing device (6) via a signal connection (S);
• Identifying at least one disturbing object (7) in the at least one image (101) using an inpainting algorithm;
• Generating at least one calculated object (8) being different to the at least one disturbing object (7) using the inpainting algorithm;
• Manipulating the at least one image (101) by replacing or overlying the at least one disturbing object (7) by the at least one calculated object (8) in the at least one image (101);

2. The method according to claim 1, further comprising:
• Transmitting the manipulated at least one image (102) to a display device unit (9) via a further signal connection (S);
• Displaying the manipulated at least one image (102) on the display device unit (9).

3. The method according to claim 1 or 2,
wherein the inpainting algorithm is based on a generative adversarial networks architecture, preferably comprising a generative network model and an adversarial network model, and/or comprises at least one generative adversarial networks algorithm including a generator module and a discriminator module.

4. The method according to any one of the preceding claims, wherein at least one prediction model is used for generating the at least one calculated object (8), the at least one prediction model being based on the evaluation of at least one section (10) of the at least one image (101) and/or at least one criterion being extracted and/or derived and/or interpolated from the at least one section (10) of the at least one image (101).

5. The method according to claim 4,
wherein the at least one criterion comprises a parameter and/or a range of parameters and/or a condition to be fulfilled, each preferably linked to a probability parameter.

6. The method according to any one of the preceding claims, wherein identifying further comprises
recognizing and/or evaluating the at least one disturbing object (7) by the inpainting algorithm as being incompatible with regard to at least one section (10) of the at least one image (101) being arranged surrounding and/or adjacent to the at least one disturbing object (7) in the at least one image (101).

7. The method according to any one of the preceding claims, wherein generating further comprises evaluating the at least one calculated (8) object by the inpainting algorithm as being compatible with regard to at least one section (10) of the at least one image (101) being arranged surrounding and/or adjacent to the at least one calculated object (8) in the at least one image (101) .

8. The method according to any one of the preceding claims, wherein the at least one disturbing object (7) and/or the at least one calculated object (8) and/or at least one section (10) of the at least one image (101) comprise at least one pixel value and/or at least one pixel information.

9. The method according to any one of the preceding claims, wherein the inpainting algorithm is configured to and/or trained to identify a plurality of disturbing objects (7) being arranged regularly in at least one direction or mesh pattern-like in the at least one image (101), or wherein the method further comprises training of the inpainting algorithm using at least one section (10) of the at least one image (101), preferably to identify a plurality of disturbing objects (7) being arranged regularly in at least one direction or mesh pattern-like in the at least one image (101).

10. The method according to any one of the preceding claims, wherein identifying further comprises
searching the at least one image (101) for a plurality of sections (10) comprising identical and/or at least similar pixel value and/or pixel information.

11. A computing device (6), comprising at least one central processing unit (11) being connected to at least one memory (12) and at least one interface (13) for signal connection (S) with at least one camera unit (5), the computing device (6) being configured to perform at least partially the method for providing at least one manipulated image (102) according to any one of the preceding claims 1 to 10.

12. The computing device (6) according to claim 11,
wherein the computing device (6) further comprises at least one display device unit (9) and/or is connectable with or connected with at least one display device unit (9) via a further signal connection (S).

13. An apparatus (1), preferably a kitchen apparatus (1), for processing a substance (2) in a cavity (3) of the apparatus (1), the substance (2) being preferably shielded by a metal grid (4), wherein the apparatus (1) comprises a camera unit (5), the camera unit (5) being preferably arranged opposite to the substance (2) with reference to the metal grid (4), and wherein the apparatus (1) comprises a computing device (6) and/or is connectable with or connected with a computing device (6) via a further signal connection (S), the computing device (6), preferably according to claim 11 or 12, being configured to perform at least partially the method for providing at least one manipulated image (102) according to any one of the preceding claims 1 to 10.

14. The apparatus (1) according to claim 13,
wherein the apparatus (1) further comprises at least one display device unit (9) and/or is connectable with or connected with at least one display device unit (9) via a further signal connection (S).

15. The apparatus (1) according to claim 13 or 14,
wherein the apparatus (1) is an oven, preferably a microwave oven or a microwave-combi oven, a refrigerator, a freezer, a hood, a washing machine or a dryer.

16. A computer program product, wherein the computer program product comprises computer program code which is stored on a machine-readable medium or being embodied by at least one electromagnetic wave comprising a computer program code segment, and includes computer-executable instructions for performing at least partially the method for providing at least one manipulated image (102) according to any one of the preceding claims 1 to 10, preferably when executed on the computing device (6) according to claim 11 or 12 or the apparatus (1) according to any one of the preceding claims 13 to 15.
